# EUROPÄISCHE PATENTSCHRIFT

(11) **EP 0 628 758 B1**
(45) Veröffentlichungstag und Bekanntmachung des Hinweises auf die Patenterteilung: **12.02.1997**
(21) Anmeldenummer: 94108518.5
(22) Anmeldetag: 03.06.1994
(51) Int. Cl.: F16L 1/24

(54) **Auftriebskörper für Rohrleitungen**
Float for pipes
Flotteur pour conduites

(30) Priorität: 11.06.1993 DE 9308686 U
(43) Veröffentlichungstag der Anmeldung: 14.12.1994
(73) Patentinhaber: Eddelbüttel & Schneider GmbH, D-21217 Seevetal (DE)
(72) Erfinder: Schneider, Klaus, D-21043 Hamburg (DE)
(74) Vertreter: Liebelt, Rolf, Dipl.-Ing.

(56) Entgegenhaltungen:
- DE-A- 2 004 007
- GB-A- 1 090 757
- US-A- 4 386 919

## Beschreibung

Die Erfindung betrifft einen Auftriebskörper für Rohrleitungen, insbesondere von Saugbaggern, der aus wenigstens zwei, die Rohrleitung hülsenförmig umschließenden Hohlkörpern aus Kunststoff besteht, die von bandförmigen Klemmelementen zusammengehalten werden, die in Ringnuten auf der äußeren Mantelfläche der Hohlkörper angeordnet sind.

Beim Baggern zur Herstellung oder Vertiefung von schiffbaren Gewässern oder zur Gewinnung von Kies oder Sand wird - soweit das Saugverfahren angewendet wird - der vom Bagger zum Ufer führende Teil der Rohrleitung zur Abförderung des geförderten Gutes mit derartigen aus der DE-OS 2 004 007 bekannten und mit Schaumstoff gefüllten Auftriebskörpern schwimmfähig gemacht, um eine in weiten Bereichen ungehinderte Ortsveränderung des Baggers zu ermöglichen. Nachteilig ist bei diesen Auftriebskörpern nicht nur der große Werkstoffbedarf für die Schaumstoff-Füllung. Es wird aus Gründen des Umweltschutzes auch immer problematischer, diese Körper wegen des Schaumstoffanteiles zu entsorgen.

In der US-PS 4 764 137 sind weiter Auftriebskörper aus Stahl beschrieben, die gleichfalls mit Schaumstoff gefüllt sind. Abgesehen von den Nachteilen, die dem Schaumstoff anhaften, sind Stahlkörper schwer und korrosionsanfällig und lassen sich nur schwierig so gestalten, daß die Rohrleitung halb eintaucht und sich frei drehen kann.

Zur Vermeidung der sich aus der Schaumstoff-Füllung ergebenden Probleme werden schon Auftriebskörper eingesetzt, deren Kunststoffhohlkörper nur mit Luft gefüllt und gegenüber der Atmosphäre hermetisch verschlossen sind. Diese Körper weisen gegenüber solchen mit einer Schaumstoff-Füllung eine wesentlich geringere Festigkeit auf, insbesondere wirken sich Temperaturschwankungen der Umgebung erheblich auf den Druck der eingeschlossenen Luft aus, was bei hohen Umgebungstemperaturen zu unkontrollierten und unerwünschten Ausbeulungen und bei sehr niedrigen Umgebungstemperaturen zu Einbeulungen der Hohlkörper führt. Diesen temperaturabhängigen Verformungen mit z. B. metallischen Einbauten zu begegnen, schafft gleichfalls Schwierigkeiten bei der Entsorgung der Hohlkörper. Deshalb wurden zwischen der äußeren und inneren Mantelfläche der Hohlkörper konische Durchbrüche ausgebildet, die als Stützelement zwischen diesen Flächen wirken. Im Bereich dieser Durchbrüche ist jedoch die Einhaltung einer für diese Hohlkörper unerläßlichen konstanten Wandstärke äußerst schwierig.

Aufgabe der Erfindung ist es nun, mit Luft gefüllte Hohlkörper von Auftriebskörpern für Rohrleitungen, insbesondere von Saugbaggern, mit einem großen Verformungswiderstand zu versehen und deren Entsorgung zu erleichtern.

Diese Aufgabe wird erfindungsgemäß ausgehend von einem Auftriebskörper der eingangs beschriebenen Gattung dadurch gelöst, daß in die äußere Mantelfläche der Hohlkörper sich über deren gesamte Länge erstreckende, vorzugsweise keilförmige Axialnuten eingearbeitet sind.

Diese nach der Erfindung in den äußeren Mantel des Hohlkörpers eingeformten Axialnuten verleihen dem Hohlkörper nicht nur eine ausreichende Versteifung, insbesondere gegen die von Temperaturänderungen hervorgerufenen Schwankungen des Druckes der Luftfüllung. Sie ermöglichen auch beim Einsatz bestimmter Schlösser an den für den festen Zusammenhalt und Sitz der Hohlkörper unabdingbar benötigten Spannbänder die Spannwerkzeuge in diesem Bereich innerhalb und außerhalb der Spannbänder anzusetzen.

Bei einer zweckmäßigen Weiterbildung der Erfindung ist die innere Mantelfläche der Hohlkörper mit sich über deren gesamte Länge erstreckenden Axialrippen mit vorzugsweise rechteckigem Querschnitt versehen, die zu den Axialnuten in der äußeren Mantelfläche versetzt angeordnet sein können. Mit diesen Axialrippen, deren Höhe bei der Herstellung der Hohlkörper durch einfaches Auswechseln von Teilen am Innendurchmesser der Hauptform an die jeweiligen Gegebenheiten leicht anzupassen ist, wird neben einer Erhöhung des Versteifungswiderstandes der Hohlkörper im wesentlichen ein fester Sitz der Auftriebskörper auf den Rohren der Leitung gewährleistet, wodurch ein übermäßiger Verschleiß der Auftriebskörper durch Scheuern auf den Rohren oder durch Kippen bei zu großem Spielraum vermieden wird.

Bei einer anderen vorteilhaften Ausgestaltung der Erfindung sind die Bodenflächen der Ringnuten, von denen je eine in unmittelbarer Nähe jeder Stirnfläche der Hohlkörper vorgesehen sein kann, zwischen den Axialnuten als ebene Flächen ausgebildet.

Diese Ringnuten, von denen in jedem Hohlkörper vorzugsweise drei Stück eingeformt sind, unterstützen die von den Axialnuten ausgehende Versteifung der Hohlkörper, so daß mögliche geringe Verformungen der Hohlkörper durch Änderungen des inneren Luftdruckes bedeutungslos sind. Falls doch noch eine geringfügige Verformung der Hohlkörper auftritt, ist diese durch die bevorzugte Anordnung je einer Ringnut in unmittelbarer Nähe der Stirnflächen wegen der großen Steifigkeit dieser Flächen so weit eliminiert, daß ein Lockern der mit Vorspannung angelegten bandförmigen Klemmelemente aus textilem Werkstoff nicht möglich ist. Die Anordnung von drei Ringnuten bietet darüber hinaus den Vorteil, daß bei Montageschwierigkeiten der Auftriebskörper in die mittlere Ringnut ein übliches Montage-Spannband gelegt wird, während die beiden an die Stirnflächen angrenzenden Ringnuten die endgültigen Spannbänder aufnehmen.

Ein Ausführungsbeispiel der Erfindung wird noch an Hand der Zeichnungen beschrieben. Es stellen dar:

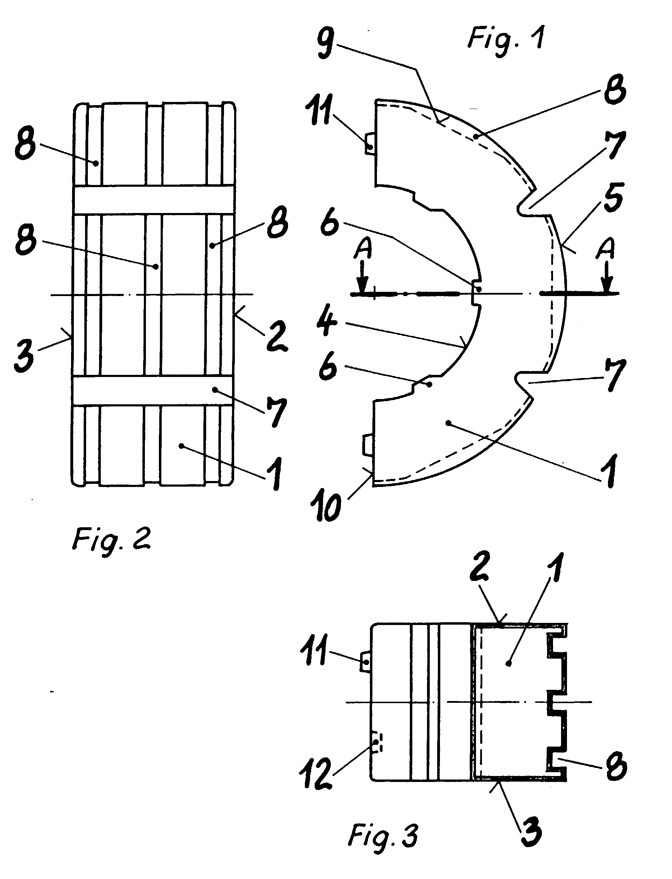

- Fig. 1: Die Ansicht eines als Halbschale ausgebildeten Hohlkörpers eines Auftriebskörpers.
- Fig. 2: Eine Draufsicht auf die Halbschale nach Fig. 1.
- Fig. 3: Eine Schnittansicht längs der Linie A - A durch die Halbschale nach Fig. 1.

Der dargestellte und als Halbschale eines Auftriebskörpers, der um eine nicht gezeigte Förderleitung eines Saugbaggers anordenbar ist, ausgebildete Hohlkörper 1 besteht aus Polyethylen und weist zwei Stirnflächen 2 und 3 sowie eine innere 4 und äußere 5 Mantelfläche auf. In der inneren Mantelfläche 4 sind Axialrippen 6 ausgebildet, die sich über die Gesamtlänge des Hohlkörpers 1 erstrecken und mit denen der Hohlkörper 1 bzw. der aus mehreren Hohlkörpern 1 gebildete Auftriebskörper sich auf der Förderleitung abstützt.

In die äußeren Mantelfläche 5 des Hohlkörpers 1 sind versetzt zu den Axialrippen 6 V-förmige Axialnuten 7, die sich gleichfalls über die gesamte Länge des Hohlkörpers 1 erstrecken, und Ringnuten 8 eingearbeitet. Die Bodenflächen 9 der Ringnuten 8, in denen die zum Zusammenhalten der einen Auftriebskörper bildenden Hohlkörper 1 dienenden Spannbänder (nicht gezeigt) angeordnet werden, sind im Bereich zwischen den Axialnuten 7 nicht gekrümmt, sondern als ebene Flächen ausgebildet, wodurch die Hohlkörper 1 eine zusätzliche Versteifung erhalten.

Der Hohlkörper 1 weist an seinen Bodenflächen 10 noch Vorsprünge 11 und Vertiefungen 12 auf, die beim Zusammenfügen von Hohlkörpern 1 zu einem Auftriebskörper eine Verzahnung der einzelnen Körper miteinander herstellen.

## Patentansprüche

1. Auftriebskörper für Rohrleitungen, insbesondere von Saugbaggern, der aus wenigstens zwei, die Rohr-Leitung hülsenförmig umschließenden Hohlkörpern (1) aus Kunststoff besteht, die von bandförmigen Klemmelementen zusammengehalten werden, die in Ringnuten (8) auf der äußeren Mantelfläche (5) der Hohlkörper (1) angeordnet sind, wobei in die äußere Mantelfläche (5) der Hohlkörper (1) sich über deren gesamte Länge erstreckende Axialnuten (7) eingearbeitet sind.

2. Auftriebskörper nach Anspruch 1, dadurch gekennzeichnet, daß die Axialnuten (7) keilförmig sind.

3. Auftriebskörper nach Anspruch 1 oder 2, dadurch gekennzeichnet, daß die innere Mantelfläche (4) der Hohlkörper (1) mit sich über deren gesamte Länge erstreckenden Axialrippen (6) versehen ist.

4. Auftriebskörper nach Anspruch 3, dadurch gekennzeichnet, daß die Axialrippen (6) einen rechteckigen Querschnitt haben.

5. Auftriebskörper nach Anspruch 2 und 4, dadurch gekennzeichnet, daß die Axialnuten (7) und Axialrippen (6) versetzt zueinander angeordnet sind.

6. Auftriebskörper nach einem der vorhergehenden Ansprüche, dadurch gekennzeichnet, daß die Bodenflächen (9) der Ringnuten (8) zwischen den Axialnuten (7) sich als ebene Flächen erstrecken.

7. Auftriebskörper nach Anspruch 6, dadurch gekennzeichnet, daß je eine Ringnut (8) in unmittelbarer Nähe jeder Stirnfläche (2, 3) der Hohlkörper (1) vorgesehen ist.

8. Auftriebskörper nach Anspruch 6 oder 7, dadurch gekennzeichnet, daß die Hohlkörper (1) drei Ringnuten (8) aufweisen.

## Claims

1. Float for pipes, in particular of suction dredgers, consisting of at least two hollow bodies (1) of plastics material which surround the pipe in the form of a sleeve and are held together by band-like clamping elements arranged in annular grooves (8) on the external surface (5) of the hollow bodies (1), wherein axial grooves (7) extending over the entire length of the hollow bodies (1) are worked into the external surface (5) of the hollow bodies (1).

2. Float according to claim 1, characterised in that the axial grooves (7) are wedge-shaped.

3. Float according to claim 1 or 2, characterised in that the internal surface (4) of the hollow bodies (1) is provided with axial ribs (6) extending over their entire length.

4. Float according to claim 3, characterised in that the axial ribs (6) have a rectangular cross section.

5. Float according to claims 2 and 4, characterised in that the axial grooves (7) and axial ribs (6) are offset from one another.

6. Float according to one of the preceding claims, characterised in that the bases (9) of the annular grooves (8) extend between the axial grooves (7) as plane faces.

7. Float according to claim 6, characterised in that one respective annular groove (8) is provided in the immediate vicinity of each end face (2, 3) of the hollow bodies (1).

8. Float according to claim 6 or 7, characterised in that the hollow bodies (1) have three annular grooves (8).

## Revendications

1. Flotteur pour conduites tubulaires, notamment pour conduites de dragues suceuses, qui est composé d'au moins deux corps creux (1) en matière plastique, entourant la conduite tubulaire concernée à la façon d'un manchon, et qui sont maintenus assemblés par des éléments de serrage en forme de bande, lesquels sont disposés dans des gorges annulaires (8) sur la surface latérale extérieure (5) des corps creux (1), cependant que, dans la surface latérale extérieure (5) des corps creux (1), sont ménagées des gorges axiales (7) s'étendant sur toute la longueur de ces corps.

2. Flotteur selon la revendication 1, caractérisé en ce que les gorges axiales (7) sont en forme de coins.

3. Flotteur selon la revendication 1 ou 2, caractérisé en ce que la surface latérale intérieure (4) des corps creux (1) est munie de nervures axiales (6) s'étendant sur toute la longueur de ceux-ci.

4. Flotteur selon la revendication 3, caractérisé en ce que les nervures axiales (6) ont une section rectangulaire.

5. Flotteur selon les revendications 2 et 4, caractérisé en ce que les gorges axiales (7) et les nervures axiales (6) sont décalées angulairement les unes par rapport aux autres.

6. Flotteur selon l'une au moins des revendications précédentes, caractérisé en ce que les surfaces de fond (9) des gorges annulaires (8) s'étendent selon des surfaces planes entre les gorges axiales (7).

7. Flotteur selon la revendication 6, caractérisé en ce qu'il est prévu une gorge annulaire (8) à proximité immédiate de chaque surface frontale (2, 3) des corps creux (1).

8. Flotteur selon la revendication 6 ou 7, caractérisé en ce que les corps creux (1) présentent trois gorges annulaires (8).
